# EUROPÄISCHE PATENTSCHRIFT

(11) **EP 3 907 569 B1**
(45) Veröffentlichungstag und Bekanntmachung des Hinweises auf die Patenterteilung: **02.07.2025**
(21) Anmeldenummer: 20172976.1
(22) Anmeldetag: 05.05.2020
(51) Int. Cl.: G05B 19/042

(54) **FELDGERÄT MIT EINEM SICHERHEITSMODUL, NACHRÜSTMODUL FÜR EIN FELDGERÄT, VERFAHREN ZUR EINSTELLUNG EINER IT-SICHERHEITSSTUFE UND COMPUTERPROGRAMMCODE**
FIELD DEVICE WITH A SECURITY MODULE, RETROFIT MODULE FOR A FIELD DEVICE, METHOD FOR SETTING AN IT SECURITY LEVEL AND COMPUTER PROGRAM CODE
APPAREIL DE TERRAIN DOTÉ D'UN MODULE DE SÉCURITÉ, MODULE DE MISE À NIVEAU POUR UN DISPOSITIF DE TERRAIN, PROCÉDÉ DE RÉGLAGE D'UN NIVEAU DE SÉCURITÉ INFORMATIQUE ET CODE DE PROGRAMME INFORMATIQUE

(43) Veröffentlichungstag der Anmeldung: 10.11.2021
(73) Patentinhaber: VEGA Grieshaber KG, 77709 Wolfach (DE)
(72) Erfinder: Welle, Roland, 77756 Hausach (DE)
(74) Vertreter: Patentanwälte Bauer Vorberg Kayser

(56) Entgegenhaltungen:
- EP-A1- 3 451 215
- EP-A1- 3 509 247
- DE-A1- 102016 110 723

## Beschreibung

Aus dem Stand der Technik sind verschiedene Arten von Feldgeräten bekannt.

Unter dem Begriff Feldgerät werden dabei verschiedene technische Einrichtungen subsummiert, die mit einem Produktionsprozess in direkter Beziehung stehen. Feldgeräte können damit insbesondere Aktoren, Sensoren und Messumformer und/oder Auswertegeräte sein.

Deutlich von Feldgeräten abzugrenzen sind in der Terminologie, wie sie in der vorliegenden Anmeldung verwendet wird, übergeordnete Einheiten, die dem Bereich der Leitwarten zuzuordnen sind.

Bekannte Feldgeräte für die Prozessautomatisierung weisen bislang nur herstellerspezifisch definierte Vorrichtungen und Verfahren zur Umsetzung von Aspekten der IT-Sicherheit auf. Neuere gesetzliche Vorgaben in verschiedenen Ländern fordern, für kritische Infrastruktureinrichtungen (KRITIS) vorgegebene Sicherheitsstufen (Security Level, SL) zu implementieren.

Feldgeräte messen als Prozessmessgeräte seit vielen Jahren zuverlässig prozessrelevante Messgrößen von Medien in den unterschiedlichsten Anwendungen. In den Anfangsjahren der Prozessleittechnik wurden die ermittelten Messwerte zumeist in analoger Weise mit Hilfe analoger Schnittstellen, beispielsweise einer 4-20mA Schnittstelle, von einem Prozessmessgerät hin zu einer übergeordneten Einheit bspw. einem Auswertegerät oder einer Prozessleitstelle übertragen. Im Zuge der Digitalisierung wurde dieser Standard durch zusätzliches Einprägen digitaler Signale, beispielsweise nach dem HART-Standard, erweitert, wodurch auch eine bidirektionale Kommunikation zwischen Prozessmessgerät und Prozessleitstelle möglich wurde. Charakteristisch an solchen Prozessleitsystemen war aber, dass die Anlagen im Wesentlichen im Inselbetrieb betrieben wurden. Eine Verbindung zwischen unterschiedlichen Prozessleitsystemen verschiedener Standorte oder verschiedener Firmen oder eine Anbindung der Systeme ans World Wide Web war nicht vorgesehen.

In den letzten Jahren hat sich insbesondere mit den Ansätzen der vierten industriellen Revolution (Industrie 4.0) die Notwendigkeit herausgestellt, durch einen höheren Grad der Vernetzung ganze Prozessleitsysteme oder aber auch ganze Produktionsstandorte miteinander zu verknüpfen, beispielsweise über das World Wide Web. Die damit einhergehende Vernetzung von Industrial-IT-Systemen und Office-IT-Systemen führt allerdings zu einer Reihe neuer Herausforderungen, insbesondere im Bereich der IT-Security, die eine Fortentwicklung bestehender Geräte und Komponenten zwingend notwendig macht.

Ein weiterer Anwendungsbereich ergibt sich durch seit kurzer Zeit verfügbare autarke Feldgeräte, insbesondere autarke Sensoren. Sensoren, also Feldgeräte dieser Produktfamilie zeichnen sich durch eine besonders einfache Montage ohne Anbringen einer Kommunikations- oder Versorgungsleitung aus. Die von diesen Feldgeräten ermittelten Messwerte werden typischerweise unter Verwendung einer Schmalbandfunktechnologie (LoRa, Sigfox, NB-IOT) in eine Cloud, d.h. auf einen Server im World Wide Web übertragen. Typische Anwendungsszenarien für solche Feldgeräte umfassen Bereiche wie die Hochwasservorhersage, Lagerbestandsverwaltung oder auch andere dezentral verteilte Messaufgaben. Durch die direkte Anbindung ans World Wide Web sind solche Feldgeräte inhärent einer permanenten Bedrohung durch Hackerangriffe aus dem Netz ausgesetzt.

Um auch zukünftig die Verfügbarkeit von Produktivsystemen zu gewährleisten, werden aktuell von verschiedenen Branchen Standards definiert, die darauf abzielen, die Komponenten von Prozessleitsystemen in Bezug auf ihre Resilienz gegenüber fahrlässig oder mutwillig initiierten äußeren Angriffen zu härten und somit die Verfügbarkeit der Feldgeräte zu erhöhen und damit die Produktivität der Anlagenbetreiber zu sichern.

Darüber hinaus werden auch von Seite der Gesetzgeber neue Anforderungen an die Betreiber und Hersteller von Geräten formuliert, welche das Ziel verfolgen, kritische Infrastruktureinrichtungen (KRITIS) wie beispielsweise Energie (Strom, Gas, Öl), Transport (Luft, Bahn, Wasser, Straße), Trinkwasserversorgung oder auch digitale Infrastruktur widerstandsfähig gegenüber fahrlässigen oder mutwilligen Hackerangriffen zu machen. Beispielhaft hierfür steht die vom Europäischen Parlament beschlossene Richtlinie 2016/1148 (NIS-Richtlinie), welche inzwischen von den Mitgliedsstaaten der Europäischen Union in nationales Recht umgesetzt worden ist.

Abhängig von der Gefährdungslage am jeweiligen Anwendungsort wird in den bislang existierenden Cyber-Security-Normen (z.B. IEC 62443, ISO 27001) gefordert, dass die dort eingesetzten Geräte eine standardisierte IT-Sicherheitsstufe, auch Security Level (SL) genannt, erfüllen.

Die IEC 62443 (Stand_08/2013 zum Beispiel, hat dafür die folgenden Security Levels definiert, die nach den dem Angreifer zur Verfügung stehenden Mitteln, zur Verfügung stehenden materiellen und finanziellen Ressourcen, den technischen Fähigkeiten sowie der zugrundeliegenden Motivation eingeteilt werden.

| **Fähigkeiten des Angreifers** | | | | |
|---|---|---|---|---|
| | **Mittel** | **Ressourcen** | **Fähigkeiten** | **Motivation** |
| **SL0** | keine Gefahr der Beeinträchtigung / Manipulation | | | |
| **SL1** | zufällige / beiläufige Beeinträchtigung / Manipulation | | | |
| **SL2** | einfach | begrenzt | allgemein | niedrig |
| **SL3** | ausgefeilt | mittel | domänenspezifisch | mittel |
| **SL4** | ausgefeilt | umfangreich | domänenspezifisch | hoch |

Die Sicherheitsstufe SL0 ist dabei ein rein theoretisches Konstrukt, bei dem keinerlei Beeinträchtigungs- oder Manipulationsrisiko besteht und daher keine Maßnahmen notwendig sind.

Die Sicherheitsstufe SL1 beschreibt die Fähigkeit eines Systems, zufällige und unbeabsichtigte Beeinträchtigungen oder Manipulationen zu vermeiden.

Die Sicherheitsstufe SL2 beschreibt die Fähigkeit eines Systems, beabsichtigte Manipulationen von interessierten Einzelpersonen und Firmen mit generischen Security-Kenntnissen, abzuwehren.

Die Sicherheitsstufe SL3 beschreibt die Fähigkeit eines Systems, beabsichtigte Manipulationen von Experten und Firmen, die mit klaren Zielen effektive, jedoch kostenorientierte Angriffsszenarien entwickeln und einsetzen, abzuwehren.

Die Sicherheitsstufe SL4 beschreibt die Fähigkeit eines Systems, beabsichtigte Manipulationen von Organisationen mit Experten, bei denen die Erreichung des spezifisch ausgewählten Angriffsziels um fast jeden Preis im Vordergrund steht, abzuwehren.

Bei der Umsetzung dieser Sicherheitsstufen können einzelne Sicherheitsstufen zusammengefasst, oder zusätzliche Sicherheitsstufen als Zwischenstufen eingezogen werden.

Für die Hersteller von Feldgeräten, insbesondere auch für die Hersteller von Füllstand- und Drucksensoren, erwächst aus diesen Rahmenbedingungen die Notwendigkeit, die in unterschiedlichen (branchenspezifischen) Normen und Gesetzen verankerten IT-Security Vorgaben in angemessener Weise während der Entwicklung und später während des Betriebs der Feldgeräte durch ein Zusammenspiel entsprechend realisierter Hard- und Softwarekomponenten umzusetzen.

Diese Umsetzung erweiterter Maßnahmen macht es regelmäßig erforderlich, zusätzliche Hardwarekomponenten und/oder zusätzliche Softwarekomponenten in die Feldgeräte zu integrieren. Damit einhergehend steigt der Energieverbrauch der Geräte mitunter stark an, was insbesondere bei batteriebetriebenen Feldgeräten die Lebensdauer oder zumindest den zeitlichen Abstand notwendiger Wartungszyklen verkürzen kann.

Zudem besteht das Problem, dass branchenspezifische Normen mit den jeweils darin definierten IT-Sicherheitsstufen SL technisch berücksichtigt werden müssen. Außerdem ist den unterschiedlichen Regelungen von Seiten des Gesetzgebers Rechnung zu tragen.

Eine naheliegende Lösung besteht darin, Geräte zielgerichtet für die unterschiedlichen Branchen bereitzustellen, welche die jeweils geforderten, branchenspezifischen IT-Sicherheitsstufen SL technisch berücksichtigen. Um für alle möglichen Anwendungsfälle innerhalb beispielsweise einer Raffinerie vorbereitet zu sein, müssen prinzipiell aber auch unterschiedliche Geräte für jede vom Kunden benötigte IT-Sicherheitsstufe bereitgestellt werden. Es ist offensichtlich, dass dieser Ansatz die Vielfalt an Gerätevarianten massiv erhöht, und somit die wirtschaftliche Entwicklung und Herstellung von entsprechenden Feldgeräten unwirtschaftlich macht. Würde hingegen grundsätzlich nur ein einziges branchenspezifisches Gerät bereitgestellt, welches die höchste Sicherheitsstufe implementiert, würde dies zu hohen Hardwarekosten und hohem Energieverbrauch verbunden mit einer reduzierten Ergonomie bei der Bedienung der Geräte führen.

EP 3 451 215 A1 zeigt die im Oberbegriff der unabhängigen Ansprüche genannten Merkmale.

Weiterer Stand der Technik ist aus DE 10 2016 110 723 A1 und EP 3 509 247 A1 bekannt.

Es ist die Aufgabe der vorliegenden Erfindung, ein Feldgerät derart weiterzubilden, dass die aus dem Stand der Technik bekannten Probleme reduziert werden.

Diese Aufgabe wird durch ein Feldgerät mit den Merkmalen des Patentanspruchs 1, ein Nachrüstmodul mit den Merkmalen des Patentanspruchs 11**,** ein Verfahren mit den Merkmalen des Patentanspruchs 15 sowie einen Computerprogrammcode mit den Merkmalen des Patentanspruchs 21 gelöst.

Ein erfindungsgemäßes Feldgerät der Prozessautomatisierungstechnik mit einer Feldgeräteelektronik mit wenigstens einer Kommunikationsschnittstelle weist ein Sicherheitsmodul mit einer Mehrzahl von funktionalen Einheiten zur Implementierung einer Mehrzahl vorgegebener IT-Sicherheitsstufen unterschiedlicher Höhe auf, wobei ferner das Sicherheitsmodul ein Auswahlelement zur Auswahl einer IT-Sicherheitsstufe aufweist, wobei auf Basis der Auswahl die zur Implementierung der ausgewählten IT-Sicherheitsstufe notwendigen funktionalen Einheiten aktiviert und nicht notwendige funktionale Einheiten deaktiviert werden.

Grundsätzliche Idee der vorliegenden Erfindung ist es, Feldgeräte derart auszugestalten, dass diese befähigt sind, unterschiedliche vorgegebene IT-Sicherheitsstufen zu realisieren.

Das erfindungsgemäße Feldgerät kann auf diese Weise für mehr als eine Sicherheitsstufe eingesetzt werden, sodass eine an die geplante Verwendung und die dadurch vorgegebenen IT-Sicherheitsanforderungen angepasste Sicherheitsstufe ausgewählt und verwendet werden kann. Auf diese Weise muss der Anwender bspw. keine unnötigen Einbußen beim Bedienkomfort hinnehmen. Ferner verbraucht das Feldgerät auch immer nur die für die jeweilige IT-Sicherheitsstufe notwendige Energie, sodass insbesondere energieautark betriebene Geräte keine unnötige Energie verbrauchen.

Mehrzahl von funktionalen Einheiten zur Implementierung einer Mehrzahl vorgegebener IT-Sicherheitsstufen bedeutet in diesem Zusammenhang, dass durch wenigstens zwei funktionale Einheiten wenigstens zwei unterschiedliche IT-Sicherheitsstufen implementiert werden können.

Unter funktionalen Einheiten werden in der vorliegenden Anmeldung in Hardware und Software implementierte Funktionsblöcke verstanden, die für die Einhaltung der vorgegebenen IT-Sicherheitsstufen ausschlaggebend sind. Insbesondere unterscheiden sich die IT-Sicherheitsstufen unterschiedlicher Höhe wenigstens in einer funktionalen Einheit, d.h. dass zur Implementierung der einen IT-Sicherheitsstufe wenigstens eine funktionale Einheit aktiviert oder deaktiviert ist, die zur Implementierung einer anderen IT-Sicherheitsstufe entsprechend nicht aktiviert oder deaktiviert ist.

Die dieser Anmeldung zugrundeliegenden IT-Sicherheitsstufen können verschiedene Aspekte der IT-Sicherheit betreffen und durch verschiedene Maßnahmen, die in der vorliegenden Anmeldung in den funktionalen Einheiten zusammengefasst sind, implementiert werden.

Aspekte der IT-Sicherheit, wie sie in den anmeldungsgegenständlichen IT-Sicherheitsstufen implementiert sein können, sind unter anderem verschiedene Stufen der Identifikation und Authentifizierung von Nutzern, Geräten und Software, der Nutzungskontrolle, der Absicherung der Kommunikation des Feldgerätes hinsichtlich Authentifizierung und Integrität sowie bspw. von geforderten Reaktionszeiten.

Erfindungsgemäß ist das Sicherheitsmodul derart ausgebildet, dass eine einmalige Auswahl der IT-Sicherheitsstufe möglich ist. Das bedeutet in diesem Zusammenhang, dass die IT-Sicherheitsstufe, einmalig ausgewählt werden kann und anschließend festgelegt, also unveränderlich ist. Erfindungsgemäß kann die IT-Sicherheitsstufe einmalig nutzerseitig ausgewählt werden. Das bedeutet, dass das Feldgerät im Auslieferungszustand keine, oder eine beliebige, herstellerseitig vorgebbare IT-Sicherheitsstufe aufweisen kann, die dann einmalig nutzerseitig verändert werden kann.

Eine einmalig nutzerseitige Auswahl, kann dabei insbesondere bedeuten, dass eine nachträgliche nutzerseitige Veränderung des IT-Sicherheitslevels nicht möglich ist. In bestimmten Ausführungsformen kann zwischen einer nutzerseitigen Veränderung des IT-Sicherheitslevels und einer administratorseitigen Veränderung des IT-Sicherheitslevels unterschieden werden. Das bedeutet, dass in einer Ausführungsform vorgesehen sein kann, dass ein Administrator das IT-Sicherheitslevel auch nach einer erstmaligen Einstellung bei der Inbetriebnahme auch nachträglich noch ändern kann. Hierzu kann aber bspw. vorgesehen sein, dass dies zusätzlich zu einer Authentifizierung als Administrator nur mit einem gerätespezifischen Entsperrcode und/oder mit einer zusätzlichen herstellerseitigen Freigabe erfolgen kann.

Zur Sicherstellung, dass das Feldgerät nur mit der gewünschten Sicherheitsstufe betrieben werden kann, ist das Sicherheitsmodul erfindungsgemäß derart ausgestaltet, dass eine Auswahl der IT-Sicherheitsstufe bei einer Inbetriebnahme des Feldgeräts möglich und erforderlich ist.

Auf diese Weise kann der Betreiber einer Anlage dazu angehalten werden, bei der Inbetriebnahme eines neuen Feldgerätes die passende Sicherheitsstufe auszuwählen. Diese wird dann mit der Inbetriebnahme eingestellt und festgelegt. Zusätzlich oder alternativ zu dem oben beschriebenen Vorgehen kann ein nachträgliches Verändern der IT-Sicherheitsstufe mit einem Zurücksetzen des Feldgeräts auf Werkseinstellungen, d.h. in den Auslieferungszustand und damit mit einer erneuten Inbetriebnahme verbunden sein.

Um eine Manipulation auszuschließen kann das Sicherheitsmodul derart ausgestaltet sein, dass eine Auswahl der IT-Sicherheitsstufe ausschließlich bei einer erstmaligen Inbetriebnahme des Feldgeräts möglich ist.

Dies kann bspw. dadurch erfolgen, dass das Auswahlelement mechanisch irreversibel ausgestaltet ist. Eine mechanisch irreversible Ausgestaltung des Auswahlelements kann bspw. durch eine geeignete Verrastung einer einmal getätigten Einstellung erfolgen. Eine solche Verrastung kann z.B. derart ausgestaltet sein, dass eine Veränderung des Auswahlelements nur zu einer höheren IT-Sicherheitsstufe hin möglich ist. Alternativ kann das Auswahlelement auch mechanisch festgesetzt, bspw. verklebt oder anderweitig fixiert werden. Zusätzlich oder alternativ kann ein mechanisches Auswahlelement auch eine Sollbruchstelle aufweisen, d. h. dass das Auswahlelement bei einem erstmaligen nutzerseitigen Einstellen der IT-Sicherheitsstufe bei erfolgter Einstellung an dieser Sollbruchstelle abbricht und damit ein nachträgliches Verändern der IT-Sicherheitsstufe unmöglich macht.

Zusätzlich oder alternativ kann das Sicherheitsmodul derart ausgestaltet sein, dass eine Auswahl der IT-Sicherheitsstufe elektronisch irreversible ist. Dies kann bspw. dadurch erreicht werden, dass nach einem ersten Auslesen des Auswahlelements die dafür notwendigen elektrischen Verbindungen unterbrochen werden. Dies kann bspw. durch das gezielte Unterbrechen von dort eingebauten Sicherungen oder das anderweitige Zerstören der elektrischen Auslesbarkeit des Auswahlelements erfolgen. Zusätzlich oder alternativ können auch bei der Einstellung der IT-Sicherheitsstufe funktionale Elemente, die zur Implementierung der ausgewählten IT-Sicherheitsstufe deaktiviert werden, durch dauerhafte Unterbrechung der elektrischen Verbindung zu diesen funktionalen Elementen an einer Reaktivierung gehindert werden.

Zum Beispiel kann es zur Implementierung einer bestimmten IT-Sicherheitsstufe vorgegeben sein, dass eine Funkschnittstelle außer Betrieb gesetzt wird. In der zuvor beschriebenen Ausführungsform kann eine Reaktivierung der Funkschnittstelle verhindert werden, indem bspw. eine elektrische Verbindung zur Funkschnittstelle dauerhaft unterbrochen, oder bspw. ein Sendeelement gezielt dysfunktional gemacht wird.

Zusätzlich oder alternativ kann das Sicherheitsmodul derart ausgestaltet sein, dass eine Auswahl der IT-Sicherheitsstufe softwaretechnisch irreversibel ist. Bspw. kann ein Teil eines Programmcodes, der ein Auslesen des Auswahlelementes und eine Einstellung der IT-Sicherheitsstufe realisiert, nach einer erfolgreichen Einstellung der IT-Sicherheitsstufe gelöscht oder anderweitig derart verändert werden, dass ein erneutes Auslesen des Auswahlelements nicht möglich ist. In dieser Ausführungsform könnte das Auswahlelement dann - sofern eine Veränderung nicht auch an dieser Stelle unterbunden ist - auf die Auswahl einer anderen, gegenüber der eingestellten IT-Sicherheitsstufe verstellt werden, diese geänderte Auswahl wird aber nicht mehr ausgelesen und die IT-Sicherheisstufe damit nicht verstellt.

Um sicherzustellen, dass eine einmal ausgewählte IT-Sicherheitsstufe zumindest nicht heruntergesetzt, d.h. nachträglich eine IT-Sicherheitsstufe mit einem niedrigeren IT-Sicherheitslevel ausgewählt wird, kann vorgesehen sein, dass das Feldgerät bei Auslieferung die niedrigste IT-Sicherheitsstufe aufweist und das Sicherheitsmodul derart ausgebildet ist, dass ausschließlich eine Erhöhung der IT-Sicherheitsstufe möglich ist. Diese Funktionalität kann sowohl durch eine geeignete Ausgestaltung der Hardware, bspw. des Auswahlelements, als auch eine geeignete softwaremäßige Implementierung erreicht werden.

Alternativ ist es auch möglich, dass das Feldgerät in der höchsten IT-Sicherheitsstufe ausgeliefert wird, und nur eine Erniedrigung der IT-Sicherheitsstufe möglich ist.

Das Auswahlelement kann in einer Ausgestaltungsform als Hardware-Schalter, vorzugsweise als Schiebeschalter oder Drehschalter ausgebildet sein. Durch einen solchen Hardware-Schalter kann eine Auswahl der IT-Sicherheitsstufe intuitiv und anwenderfreundlich erfolgen. Eine in Hardware implementierte Ausgestaltung des Auswahlelements kann einen effektiven Schutz vor netzwerkbasierten Angriffen bilden und somit zur Absicherung des Feldgerätes beitragen.

In einer weiteren Ausgestaltungsform kann das Auswahlelement als Auswahlmenü in einer Bedienoberfläche des Feldgeräts ausgebildet sein. Typischerweise umfasst der Prozess der Inbetriebnahme eines Feldgerätes verschiedene Parametrierungsschritte, in die eine Auswahl der IT-Sicherheitsstufe auf diese Weise nahtlos eingefügt werden kann.

In einer Ausgestaltungsform des Feldgeräts kann das Auswahlelement einen Multiplexer ansteuern, der mit den funktionalen Einheiten zur Implementierung der IT-Sicherheitsstufe zumindest im Auslieferungszustand verbunden ist. Auf diese Weise können die verschiedenen funktionalen Einheiten zur Implementierung der IT-Sicherheitsstufe über eine geeignete Ansteuerung des Multiplexers aktiviert oder deaktiviert werden.

Nachrüstmodul für ein Feldgerät der Prozessautomatisierungstechnik mit einer Feldgeräteelektronik mit wenigstens einer Kommunikationsschnittstelle, wobei das Nachrüstmodul ein Sicherheitsmodul aufweist, wobei das Sicherheitsmodul ein Auswahlelement zur Auswahl einer IT-Sicherheitsstufe aufweist, wobei die Feldgeräteelektronik und/oder das Sicherheitsmodul eine Mehrzahl von funktionalen Einheiten zur Implementierung einer Mehrzahl vorgegebener IT-Sicherheitsstufen unterschiedlicher Höhe aufweisen, wobei das Sicherheitsmodul mit der Feldgeräteelektronik derart zusammenarbeitet, dass für die Implementierung notwendige funktionalen Einheiten aktiviert und/oder nicht notwendige funktionale Einheiten deaktiviert werden.

Ein entsprechendes Nachrüstmodul ermöglicht damit die Implementierung von IT-Sicherheitsstufen unterschiedlicher Höhe und eine Auswahl einer gewünschten IT-Sicherheitsstufe. Dabei können durch das Nachrüstmodul auch IT-Sicherheitsstufen verwirklicht werden, die das Feldgerät ohne das Nachrüstmodul nicht hätte verwirklichen können.

Merkmale von Sicherheitsstufen, die durch das Nachrüstmodul ermöglicht werden, können bspw. eine hard- oder softwarebasierte Signatur oder Verschlüsselung der Kommunikation, eine hard- oder softwarebasierte Implementierung eines zweiten Faktors zur Nutzerauthentifizierung oder eine Nutzerverwaltung sein. Ferner kann ein solches Nachrüstmodul auch ein Firmware-Update für das vorhandene Feldgerät umfassen. Durch ein solches Firmware-Update für das Feldgerät kann bspw. sichergestellt werden, dass bspw. die Feldgeräteelektronik - abhängig von der ausgewählten Sicherheitsstufe - nur noch bestimmte Kommunikationswege, Gegenstellen, oder Anbaumodule akzeptiert, und/oder eine Deinstallation des Nachrüstmoduls verweigert wird.

Das Nachrüstmodul kann dabei - wie in Bezug auf das erfindungsgemäße Feldgerät bereits erläutert - verschiedene Mechanismen aufweisen, die eine irreversible Festlegung der Sicherheitsstufe sicherstellen.

Das Nachrüstmodul kann in einer Ausgestaltungsform ein Kryptomodul zur Signierung und/oder Verschlüsselung von Daten aufweisen. Das Kryptomodul kann dabei software- oder hardwarebasiert eine Signierung von Daten zur Sicherstellung der Datenintegrität, d.h. dem Schutz der Daten vor Veränderung und/oder eine Verschlüsselung von Daten zum Schutz der Daten vor unberechtigtem Zugriff implementieren. Dies kann sowohl für die lokale Speicherung der Daten als auch für deren Übermittlung an eine übergeordnete Einheit erfolgen.

In einer weiteren Ausgestaltung weist das Nachrüstmodul ein Kommunikationsmodul zur Übermittlung von Daten des Feldgeräts an eine übergeordnete Einheit auf. Ein solches Kommunikationsmodul kann z.B. auf bekannte Art und Weise eine sichere Kommunikation zu anderen Geräten aufbauen. Alternativ kann auch eine proprietäre Kommunikation zu anderen herstellerspezifischen Geräten aufgebaut werden, sodass eine sichere Kommunikation sichergestellt ist.

In einer weiteren Ausgestaltung weist das Nachrüstmodul ein Authentifizierungsmodul auf. Ein Authentifizierungsmodul kann bspw. eine Nutzerauthentifizierung und/oder eine Nutzerverwaltung sowie ein zugeordnetes Passwortmanagement implementieren. Die Nutzerauthentifizierung kann dabei nicht nur eine Authentifizierung von Bedienpersonal umfassen, sondern auch eine Authentifizierung von zugelassenen Bediengeräten und/oder Kommunikationspartnern implementieren.

Ein erfindungsgemäßes Verfahren zur Einstellung einer IT-Sicherheitsstufe bei einem Feldgerät der Prozessautomatisierung mit einem Sicherheitsmodul mit einer Mehrzahl von funktionalen Einheiten zur Implementierung einer Mehrzahl vorgegebener IT-Sicherheitsstufen unterschiedlicher Höhe, wobei das Sicherheitsmodul ein Auswahlelement zur Auswahl einer IT-Sicherheitsstufe aufweist, weist zumindest die folgenden Verfahrensschritte auf:
Mittels des Auswahlelements wird eine gewünschte IT-Sicherheitsstufe ausgewählt. Dies kann mittels entsprechender Hard- und/oder Software realisiert werden.

Das Auswahlelement wird anschließend ausgelesen. Das bedeutet, dass die ausgewählte IT-Sicherheitsstufe ermittelt wird.

Anhand der ausgewählten IT-Sicherheitsstufe, d. h. der mit dem Auswahlelement gewählten IT-Sicherheitsstufe werden dann die für die Implementierung der ausgewählten IT-Sicherheitsstufe notwendigen funktionalen Einheiten aktiviert und/oder nicht notwendige funktionale Einheiten deaktiviert.

Es sei an dieser Stelle angemerkt, dass Aktivieren und Deaktivieren sich auf einen Betrieb des Feldgeräts bezieht und in diesem Zusammenhang, ein persistentes Inbetriebnehmen bzw. Außerbetriebnehmen der jeweiligen funktionalen Einheiten bedeutet. Eine Deaktivierung oder in anderen Worten, ein Ausschalten des gesamten Feldgeräts hat dabei keinen Einfluss auf den Status der funktionalen Einheiten nach einem erneuten Einschalten des Feldgeräts.

In einer bevorzugten Ausgestaltung des Verfahrens ist eine Einstellung der IT-Sicherheitsstufe nur einmalig, vorzugsweise einmalig bei einer Inbetriebnahme des Feldgerätes, weiter vorzugsweise, einmalig und zwangsweise bei einer Inbetriebnahme des Feldgerätes, durchführbar.

Auf diese Weise wird verhindert, dass die IT-Sicherheitsstufe, die einmal eingestellt wurde, nachträglich noch verändert, insbesondere erniedrigt wird. So wird es für Angreifer unmöglich, eine einmal gesetzte IT-Sicherheitsstufe bspw. auf eine niedrigere IT-Sicherheitsstufe zu setzen und die dann geltenden, niedrigeren Sicherheitsanforderungen bspw. zum Ausspähen von Daten auszunutzen.

Wird eine IT-Sicherheitsstufe einmalig und zwangsweise bei der Inbetriebnahme des Feldgerätes gesetzt, so wird dadurch sichergestellt, dass bei der Inbetriebnahme zwangsweise die Sicherheitsstufe ausgewählt werden muss und auch nachträglich nicht mehr verändert werden kann. Bei einem Einsatz der Feldgeräte bspw. in kritische Infrastruktureinrichtungen (KRITIS) wird auf diese Weise verhindert, dass ein Feldgerät ohne bei der Inbetriebnahme gesetzte IT-Sicherheitsstufe betrieben werden kann.

Ein Verfahren, bei dem die Einstellung der IT-Sicherheitsstufe nur einmalig möglich ist, wird dadurch erreicht, dass das Auswahlelement bei der erstmaligen Auswahl der IT-Sicherheitsstufe mechanisch deaktiviert wird. Es wird also dadurch, dass das Auswahlelement mechanisch deaktiviert, d. h. außer Funktion gesetzt wird, eine nachträgliche Veränderung der IT-Sicherheitsstufe verhindert.

Zusätzlich oder alternativ kann das Auswahlelement elektrisch deaktiviert werden und auch so erreicht werden, dass nur eine einmalige Einstellung der IT-Sicherheitsstufe möglich ist. Dies kann bspw. dadurch erfolgen, dass nach einem erstmaligen Auslesen des Auswahlelements die für das Auslesen notwendigen elektrischen Verbindungen durchtrennt werden. Bspw. können hierfür Sicherungen vorgesehen sein, die nach dem Auslesen des Auswahlelements durchtrennt werden.

Eine weitere Möglichkeit, die zusätzlich oder alternativ in dem Verfahren zum Einsatz kommen kann, ist, dass das Auswahlelement softwaremäßig deaktiviert wird. Dies kann bspw. durch Deaktivieren oder Löschen der für das Auswahlelement notwendigen Codeabschnitte erfolgen. Ebenso kann ein Auslesen des Auswahlelements durch Deaktivieren oder Löschen der dafür notwendigen Codeelemente erfolgen. Eine weitere Möglichkeit besteht darin, dass das Auswahlelement zwar weiterhin verändert und ausgelesen werden kann, dies jedoch keine Auswirkung auf die gesetzte IT-Sicherheitsstufe hat.

Um ein Ausnutzen der Auswählbarkeit der IT-Sicherheitsstufe zu verhindern, kann das Verfahren derart ausgestaltet sein, dass das Feldgerät bei einer Auslieferung die niedrigste IT-Sicherheitsstufe aufweist und diese bei der Einstellung nur erhöht werden kann. Damit wird unabhängig davon, ob eine Auswahl der IT-Sicherheitsstufe nur einmalig möglich ist, oder nicht, verhindert, dass die einmal ausgewählte IT-Sicherheitsstufe erniedrigt wird.

In einer alternativen Ausgestaltung kann das Verfahren auch vorsehen, dass das Feldgerät bei einer Auslieferung die höchste auswählbare IT-Sicherheitsstufe aufweist und diese nur erniedrigt werden kann.

Ein erfindungsgemäßer Computerprogrammcode zur Einstellung einer IT-Sicherheitsstufe bei einem Feldgerät der Prozessautomatisierung mit einem Sicherheitsmodul, ist so ausgestaltet, dass er, wenn er in einem Prozessor ausgeführt wird, diesen dazu veranlasst, ein Verfahren wie oben beschrieben auszuführen.

Die vorliegende Erfindung wird nachfolgend anhand von Ausführungsbeispielen unter Bezug auf die beigefügten Figuren eingehend erläutert. Es zeigen:
- Figur 1: ein erstes Ausführungsbeispiel eines Feldgeräts gemäß der vorliegenden Anmeldung,
- Figur 2: ein zweites Ausführungsbeispiel eines Feldgeräts gemäß der vorliegenden Anmeldung,
- Figur 3: ein drittes Ausführungsbeispiel eines Feldgeräts gemäß der vorliegenden Anmeldung mit einem Nachrüstmodul und
- Figur 4: ein Ausführungsbeispiel für ein Verfahren gemäß der vorliegenden Anmeldung.

Die nachfolgend dargestellten Ausführungsbeispiele von Feldgeräten zeigen beispielhafte Implementierungen für die Umsetzung von IT-Sicherheitsstufen SL anhand der Definitionen der Norm IEC 62443. Die Beispiele sollen rein exemplarischen Charakter zur Verdeutlichung der grundsätzlichen Strukturen und Abläufe haben, und schließen die Übertragung auf andere existierende oder zukünftig entstehende Normen mit vergleichbaren Konzepten zur standardisierten Definition von Sicherheitsstufen gemäß dem Verständnis der vorliegenden Erfindung grundsätzlich mit ein.

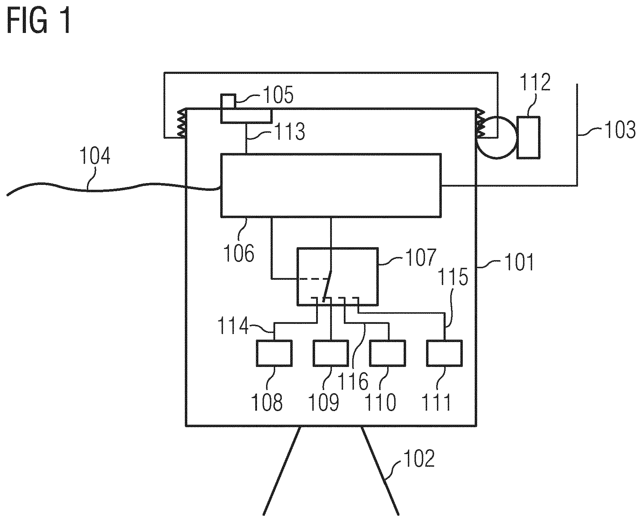

Figur 1 zeigt ein erstes Ausführungsbeispiel eines Feldgeräts 101 gemäß der vorliegenden Anmeldung. Die in Figur 1 gezeigte Darstellung ist rein schematisch und zeigt nur die für die Auswahl und Implementierung der IT-Sicherheitsstufe relevanten Komponenten.

Das Feldgerät 101 ist ausgeführt, über eine Messschnittstelle 102 eine Prozessgröße zu erfassen, beispielsweise einen Füllstand, und über eine drahtgebundene Kommunikationsschnittstelle 104 oder eine Drahtlosschnittstelle 103 nach außen hin bereitzustellen. Das Feldgerät 101 weist zur Vorgabe einer IT-Sicherheitsstufe SL ein Auswahlelement 105 auf, beispielsweise einen Schiebeschalter mit vier auswählbaren Positionen. Ein Prozessor 106 des Feldgerätes 101 erkennt anhand einer Position des Auswahlelements 105 die vom Anwender vorgegebene IT-Sicherheitsstufe SL, und aktiviert die zur eingestellten IT-Sicherheitsstufe SL gehörende Position eines Multiplexers 107 der mit funktionalen Einheiten 108, 109, 110, 111 verbunden ist. Die funktionalen Einheiten 108, 109, 110, 111 beinhalten Hard- und Softwareelemente, welche gemäß der zugrundeliegenden Definition für die IT-Sicherheitsstufen, bspw. aufgrund einer Norm notwendig sind, um eine der Sicherheitsstufen, im Fall der IEC 62443 eine der IT-Sicherheitsstufen, SL1, SL2, SL3 oder SL4 zu erreichen.

Anhand des Beispiels einer Nutzerauthentifizierung soll das Prinzip der vorliegenden Anmeldung nachfolgend verdeutlicht werden.

In der Grundstellung des Schiebeschalters 105 wird die Sicherheitsstufe SL1 vorgegeben, welche mit dem niedrigsten Grad an IT-Sicherheit korrespondieren möge. Im Falle eines Zugriffs durch einen Benutzer wird das zu SL1 gehörende Authentifizierungsmodul in der funktionalen Einheit 108 aktiviert, welches einen Mechanismus beinhaltet, den Zugang zu dem Feldgerät 101 nur dann freizuschalten, wenn sich ein Benutzer mit einem (beliebigen) Benutzername und Passwort identifiziert und authentifiziert.

Steht der Schiebeschalter 105 jedoch in der zweiten Position, so wird vom Prozessor 106 die IT-Sicherheitsstufe SL2 erkannt. Eine Anmeldeanfrage zur Erlangung eines Zugangs zu dem Feldgerät 101 wird in diesem Fall von der funktionalen Einheit 109 bearbeitet, welche Mechanismen zur Verwaltung einer vorgebbaren Liste von Benutzern mit den zugehörigen Passwörtern und individuellen Zugriffsrechten, also eine Nutzerverwaltung, beinhaltet.

Im Falle einer Positionierung des Schiebeschalters 105 in der dritten Position wird IT-Sicherheitsstufe SL3 festgelegt. Die zugehörige funktionale Einheit 110 wird in diesem Fall den Zugang zu dem Feldgerät 110 bei einer Anfrage aus einem vertrauten Netzwerk 104 heraus gewähren, wenn ein bekannter Nutzer sich mit seinem individuellen Passwort identifiziert. Bei einem Zugang aus einem nicht vertrauten Netzwerk 103 wird die Einheit 110 den Zugang jedoch nur dann gewähren, wenn ein eingetragener, zulässiger Benutzer sich per Multifaktorauthentifizierung authentifizieren kann, beispielsweise durch die Eingabe eines Passworts und das zusätzliche Auflegen eines NFC-Chips mit elektronischem Zugangscode.

Steht der Schiebeschalter 105 in der vierten Position wird die höchste IT-Sicherheitsstufe gefordert. Ein Anmeldeersuchen im Modus SL4 wird von der funktionalen Einheit 111 bearbeitet, welche unabhängig von dem Netzwerk 103, 104, aus dem eine Anfrage stammt, den Zugang zum Feldgerät 101 mit seinen Werten und Einstellungen grundsätzlich nur per Multifaktorauthentifizierung erlaubt.

Es sei an dieser Stelle darauf hingewiesen, dass mit der Aktivierung einer bestimmten IT-Sicherheitsstufe auch bestimmte Hardwareeinheiten, welche in den funktionalen Einheiten 108, 109, 110, 111 enthalten sein können, aktiviert und/oder deaktiviert werden können. So fordern beispielsweise die IT-Sicherheitsstufen SL3 und SL4 die Verwendung von hardwarebasierten Authentifizierungselementen, um an dieser kritischen Stelle eine mögliche Manipulation durch Malware grundsätzlich zu verhindern, während in den Stufen SL1 und SL2 Softwareelemente diese Aufgabe übernehmen können, was zur Energieersparnis beitragen kann.

Es kann vorgesehen sein, bei einer Aktivierung einer hohen IT-Sicherheitsstufe unsichere Zugangspunkte des Feldgeräts zu deaktivieren. Es kann beispielsweise vorgesehen sein, eine Drahtlosschnittstelle 103 bei einer Selektion der Sicherheitsstufe SL3 oder SL4 zu deaktivieren. Es kann ferner vorgesehen sein, dass dieses Deaktivieren irreversibel ausgestaltet wird, beispielsweise durch Löschen der zugehörigen Softwareteile oder durch das Durchtrennen von Sicherungen in Zuleitungen zu diesen Hardwareeinheiten.

Aus obigem Beispiel wird ersichtlich, dass sowohl der Rechenaufwand als auch der Energieverbrauch und ebenso die Ergonomie der Benutzerführung direkt durch die Wahl der IT-Sicherheitsstufe beeinflusst werden können.

Es sei an dieser Stelle darauf hingewiesen, dass neben der Benutzeranmeldung eine Vielzahl an weiteren sicherheitskritischen Anwendungsfällen von entsprechenden regulatorischen Vorgaben, bspw. Normen und Richtlinien erfasst und mit entsprechenden Mindestvorgaben im Hinblick auf die technische Umsetzung belegt werden können. Die zur Umsetzung der Mindestvorgaben notwendigen Hard- und Softwareeinheiten können in den funktionalen Einheiten 108-111 integriert sein. Darüber hinaus kann der Multiplexer 107 aus Hard- und Softwareeinheiten bestehen. Es kann vorgesehen sein, Teile des Multiplexers 107 sowie der funktionalen Einheiten 108 - 111, wenn diese in Software realisierbar sind, im Prozessor 106 zu realisieren.

Die Vorgabe der IT-Sicherheitsstufe SL mit dem Schiebeschalter 105 kann für sich genommen zu einem Sicherheitsrisiko führen. Es kann daher vorgesehen sein, andere Auswahlelemente 105 zu realisieren, beispielsweise abschließbare Selektoren, welche nur durch vom Hersteller autorisierte Servicekräfte verändert werden können. Es kann aber auch vorgesehen sein, das Auswahlelement 105 für den Kunden zugänglich zu machen, und nach vorgegebener Einstellung der IT-Sicherheitsstufe SL gegen unbefugte Veränderung zu schützen, beispielsweise durch ein Schließelement 112 oder durch das irreversible Abbrechen des Schiebeelementes 105 an einer Sollbruchstelle.

Es kann auch vorgesehen sein, das Auswahlelement 105 durch eine Softwareschnittstelle zu implementieren. In einer Ausführungsform kann der Zugang zu diesem Element auf die erste Inbetriebnahme eines Feldgeräts 101 nach Werksauslieferung beschränkt sein. In einer weiteren Ausführungsform kann vorgesehen sein, dass der Sensor 101 grundsätzlich in der höchsten Sicherheitsstufe SL4 das Werk verlässt, und ein Anwender nur nach entsprechend umfangreicher Identifizierung und Authentifizierung in die Lage versetzt wird, das in Software implementierte Auswahlelement 105 in seiner Positionierung zu verändern. Es kann auch vorgesehen sein, das Gerät 101 mit niedriger Sicherheitsstufe auszuliefern, um nach erfolgter Authentifizierung ausschließlich eine Veränderung der Sicherheitsstufe hin zu einer höheren IT Sicherheit zu ermöglichen.

Es kann vorgesehen sein, eine Veränderung des Auswahlelements 105 nur vor oder bei der Erstinbetriebnahme zu ermöglichen. Dies kann beispielsweise erreicht werden, indem eine Verbindungsleitung 113 nach dem Auslesen der Position des Auswahlelements 105 vom Prozessor 106 unumkehrbar unterbrochen wird, beispielsweise durch gezieltes Durchbrennen einer Sicherung in der Verbindungsleitung 113. Ergänzend und/oder alternativ kann vorgesehen sein, die gemäß der benötigten Sicherheitsstufe nicht mehr benötigten funktionalen Elemente 108, 109, 110, 111 durch Durchbrennen von Sicherungen in den Verbindungsleitungen 114, 115, 116 unumkehrbar zu deaktivieren. Es kann auch vorgesehen sein, nicht benötigte Softwareelemente in den funktionalen Elementen 114, 115, 116, 117 unumkehrbar und dauerhaft zu löschen bzw. die Zuleitungen zu den Speicherelementen, welche die Softwareelemente beinhalten, unumkehrbar zu unterbrechen.

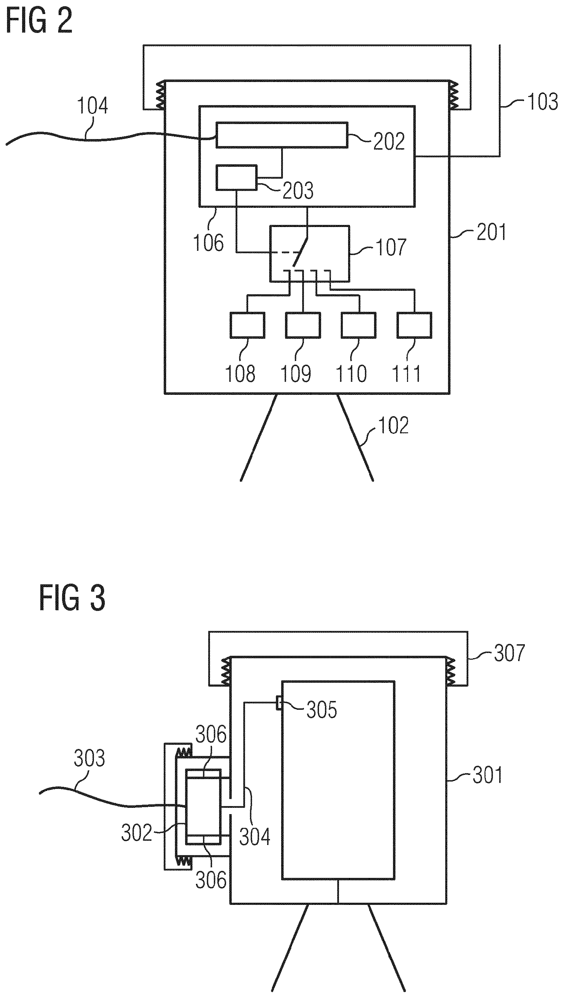

Figur 2 zeigt ein zweites Ausführungsbeispiel eines Feldgeräts 201 gemäß der vorliegenden Anmeldung. Grundgedanke dieser Ausführungsform ist, die Notwendigkeit einer Aktivierung einer für die jeweilige Anwendung erforderlichen IT-Sicherheitsstufe SL direkt in das erfindungsgemäße Feldgerät 201 zu integrieren, d.h. eine Auswahl einer IT-Sicherheitsstufe zwangsweise bei der Inbetriebnahme des Feldgeräts 201 durchzuführen. Kunden von Prozessmessgeräten haben bereits heute die Möglichkeit, die wichtigsten betriebsrelevanten Parameter eines Gerätes durch Bedienung eines Inbetriebnahme-Assistenten oder über entsprechende Eingabemasken von PCs oder Apps oder Anzeige- und Bedienmodulen zu definieren. Hierfür kann beispielsweise eine Applikationseinheit 202 verwendet werden. Die Applikationseinheit 202 kann beispielsweise geeignet ausgeführt sein, das Land der Inbetriebnahme (häufig kombiniert mit der Selektion der Sprache der Anzeigeeinheiten) und die jeweilige Branche des Betreibers zu erfassen. Aus diesen und ggf. weiteren erfragten Informationen kann die im Feldgerät 201 verbaute Sicherheitsstufenbestimmungseinrichtung 203 selbstständig ermitteln, welche Sicherheitsstufe SL für den jeweiligen Anwendungsfall angemessen ist. So kann beispielsweise bei einer Inbetriebnahme in einem europäischen Land innerhalb eines Trinkwasserspeichers vom Feldgerät 201 selbstständig ermittelt werden, dass hier ein Betrieb innerhalb einer Anlage einer kritischen Infrastruktureinrichtung (KRITIS) gewünscht wird, welcher beispielsweise einen Betrieb in der IT-Sicherheitsstufe SL3 erfordern kann. Durch Ansteuerung des Sicherheitsstufenselektors 203 kann die geforderte Sicherheitsstufe SL nach den Prinzipien der bereits im Zusammenhang mit den zur Figur 1 zugehörigen Abläufen eingestellt werden.

Oftmals wird von branchenspezifischen oder nationalen Normen (z.B. IEC 62443-1-1) neben der IT-Sicherheit speziell bei kritischen Infrastruktureinrichtungen (KRITIS) neben der Robustheit von Geräten gegenüber nicht autorisierten Zugriffen auch eine zuverlässige Funktion und fortlaufende Verfügbarkeit der Gerätefunktion gefordert. Es kann daher sowohl beim Ausführungsbeispiel der Figur 1 als auch beim Ausführungsbeispiel der Figur 2 zusätzlich vorgesehen sein, Hard- und Softwareeinheiten zu aktivieren, welche die funktionale Sicherheit der Geräte (z.B. gemäß der IEC 61508) auf ein vordefiniertes Niveau anheben.

Figur 3 zeigt eine dritte Ausführungsform eines Feldgeräts 301 mit einem Nachrüstmodul 302.

Das in Figur 3 gezeigte Feldgerät 301 offenbart damit eine Möglichkeit zur Nachrüstung eines bestehenden Feldgeräts 301, welches zuvor keine vordefinierte IT-Sicherheitsstufen SL aufweist. Solche Feldgeräte 301 werden seit vielen Jahren produziert, und es stellt für die Hersteller der Feldgeräte 301 eine Herausforderung dar, bestehende Geräte mit erweiterten IT-Sicherheitsstufen SL auszustatten. Potentielle IT-relevante Sicherheitsattacken können in einer Vielzahl an Geräten im Wesentlichen nur über eine drahtgebundene Schnittstelle 303 erfolgen. Es ist daher ein Ansatz, eine Kommunikationsleitung 303 des Feldgeräts 301 aufzutrennen, und ein Nachrüstmodul 302 mit einem Sicherheitsmodul zur Implementierung entsprechender IT-Sicherheitslevel SL einzubauen, welches beispielsweise in einer zweiten Kammer eines Gehäuses des Feldgeräts 301 untergebracht werden kann. Das Nachrüstmodul 303 kann geeignet ausgestaltet sein, eine drahtgebundene Ausgangsleitung 304 mit vordefinierter Länge zu besitzen, welche ausgeführt ist, eine ursprüngliche Kontaktierungsschnittstelle 305 des bestehenden Feldgerätes 301 zu verbinden. Es kann ergänzend oder alternativ vorgesehen sein, das Nachrüstmodul 302 nicht wieder entfernbar am Feldgerät 301 zu befestigen, beispielsweise durch mit Klebstoff fixierbare Sicherheitsschraubverbinder 306. Zudem kann vorgesehen sein, einen (nicht dargestellten) Originalgehäusedeckel durch einen selbstverklebenden und damit nicht wieder entfernbaren Gehäusedeckel 307 zu ersetzen.

Das Nachrüstmodul 302 übernimmt abhängig von der erforderlichen IT-Sicherheitsstufe SL vielfältige Sicherheitsfunktionen für das Feldgerät 301, also beispielsweise eine Nutzerverwaltung, Authentifizierung, Verschlüsselung oder auch andere Funktionen, die gemäß der gewünschten IT-Sicherheitsstufe SL von der jeweiligen Norm verlangt werden können. Es kann insbesondere auch vorgesehen sein, dass das Nachrüstmodul 302 als Firewall agiert, und die eingehenden Datenpakete fortlaufend kontrolliert und ggf. abweist.

Es kann vorgesehen sein, abhängig von der gewünschten IT-Sicherheitsstufe SL verschiedene Nachrüstmodule 302 für eine Nachrüstung beim Kunden oder im Werk bereitzustellen. Es kann auch vorgesehen sein, das Nachrüstmodul 302 derart auszugestalten, dass es gemäß den obigen Ausführungsbeispielen einstellbar ist, und somit unterschiedliche IT-Sicherheitsstufen realisiert.

Ein auf diese Weise nachgerüstetes Feldgerät 301 kann anschließend über die Kommunikationsleitung 303 nur noch über das Nachrüstmodul 302 und das darin enthaltene Sicherheitsmodul von außen erreicht werden. Ein unbefugter Zugriff und eine Manipulation am Montageort kann durch das Verkleben des Sensordeckels 307 zuverlässig unterbunden werden.

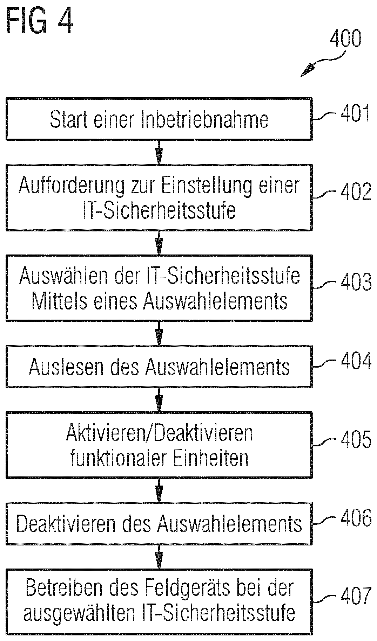

Figur 4 zeigt in einem Ablaufdiagramm eine mögliche Ausgestaltungsform eines Verfahrens 400 zur Einstellung einer IT-Sicherheitsstufe SL gemäß der vorliegenden Anmeldung.

Figur 4 stellt schematisch den Ablauf des Verfahrens 400 dar und schließt insbesondere die Einfügung weiterer Verfahrensschritte zur Einstellung der IT-Sicherheitsstufe SL oder zum Betreiben des Feldgeräts 101, 201, 301 nicht aus.

In einem ersten Schritt 401 wird die Inbetriebnahme des Feldgerätes 101, 201, 301, das gemäß einer der vorhergehenden Figuren 1 bis 3 ausgestaltet sein kann, begonnen.

Im Laufe des Inbetriebnahmeprozesses wird der Anwender in einem Schritt 402 dazu aufgefordert eine IT-Sicherheitsstufe SL, bspw. gemäß den weiter oben beschriebenen vier IT-Sicherheitsstufen SL1, SL2, SL3 und SL4 auszuwählen und ggf. diese Auswahl zu bestätigen.

In einem Schritt 403 wird die IT-Sicherheitsstufe SL mittels des Auswahlelements 105 ausgewählt, und in einem folgenden Schritt 404 das Auswahlelement 105 ausgelesen.

Abhängig von der ausgewählten und ausgelesenen IT-Sicherheitsstufe SL werden in einem weiteren Schritt 405 die für die Implementierung der ausgewählten IT-Sicherheitsstufe SL notwendigen funktionalen Einheiten 108-111 aktiviert und die für die Implementierung nicht notwendigen funktionalen Einheiten 108-111 werden deaktiviert. Nicht notwendige funktionale Einheiten umfasst ausdrücklich auch die funktionalen Einheiten, die für eine Implementierung der ausgewählten IT-Sicherheitsstufe SL deaktiviert werden müssen, bspw. die Deaktivierung einer Funkeinheit.

In dem vorliegend dargestellten Ausführungsbeispiel eines Verfahrens 400 zur Einstellung einer IT-Sicherheitsstufe SL wird in einem weiteren Schritt 406 das Auswahlelement 105 deaktiviert. Dies kann bei einer Umsetzung des Verfahrens in Software bspw. durch Löschen oder anderweitiges Unzugänglichmachen entsprechender Programmteile erfolgen.

Nach dem Einstellen der ausgewählten IT-Sicherheitsstufe SL wird das Feldgerät bei der ausgewählten IT-Sicherheitsstufe betrieben.

## Patentansprüche

1. Feldgerät der Prozessautomatisierungstechnik mit einer Feldgeräteelektronik mit wenigstens einer Kommunikationsschnittstelle, wobei das Feldgerät ein Sicherheitsmodul mit einer Mehrzahl von funktionalen Einheiten zur Implementierung einer Mehrzahl vorgegebener IT-Sicherheitsstufen unterschiedlicher Höhe aufweist, wobei die funktionalen Einheiten als in Hardware und Software implementierte Funktionsblöcke ausgestaltet sind und die funktionalen Einheiten Hardwareelemente und Softwareelemente beinhalten,
das Sicherheitsmodul ein Auswahlelement zur nutzerseitigen Auswahl einer IT-Sicherheitsstufe aufweist, wobei auf Basis der Auswahl die zur Implementierung der ausgewählten IT-Sicherheitsstufe notwendigen funktionalen Einheiten aktiviert und nicht notwendige funktionale Einheiten deaktiviert werden,
**dadurch gekennzeichnet, dass**
das Sicherheitsmodul derart ausgebildet ist, dass die Auswahl der IT-Sicherheitsstufe einmalig bei einer Inbetriebnahme des Feldgeräts möglich und erforderlich ist.

2. Feldgerät gemäß einem der vorhergehenden Ansprüche,
**dadurch gekennzeichnet, dass**
das Sicherheitsmodul derart ausgestaltet ist, dass die Auswahl der IT-Sicherheitsstufe ausschließlich bei einer erstmaligen Inbetriebnahme des Feldgeräts möglich ist.

3. Feldgerät gemäß einem der vorhergehenden Patentansprüche,
**dadurch gekennzeichnet, dass**
das Auswahlelement mechanisch irreversibel ausgestaltet ist.

4. Feldgerät gemäß einem der vorhergehenden Patentansprüche,
**dadurch gekennzeichnet, dass**
das Sicherheitsmodul derart ausgestaltet ist, dass die Auswahl der IT-Sicherheitsstufe elektronisch irreversible ist.

5. Feldgerät gemäß einem der vorhergehenden Patentansprüche,
**dadurch gekennzeichnet, dass**
das Sicherheitsmodul derart ausgestaltet ist, dass die Auswahl der IT-Sicherheitsstufe softwaretechnisch irreversibel ist.

6. Feldgerät gemäß einem der vorhergehenden Patentansprüche,
**dadurch gekennzeichnet, dass**
das Feldgerät bei Auslieferung die niedrigste IT-Sicherheitsstufe aufweist und das Sicherheitsmodul derart ausgebildet ist, dass ausschließlich eine Erhöhung der IT-Sicherheitsstufe möglich ist.

7. Feldgerät gemäß einem der Patentansprüche 1 bis 5,
**dadurch gekennzeichnet, dass**
das Feldgerät bei Auslieferung die höchste IT-Sicherheitsstufe aufweist und das Sicherheitsmodul derart ausgebildet ist, dass ausschließlich eine Erniedrigung der IT-Sicherheitsstufe möglich ist.

8. Feldgerät gemäß einem der vorhergehenden Patentansprüche,
**dadurch gekennzeichnet, dass**
das Auswahlelement als Hardware-Schalter, vorzugsweise als Schiebeschalter oder Drehschalter ausgebildet ist.

9. Feldgerät gemäß einem der vorhergehenden Patentansprüche,
**dadurch gekennzeichnet, dass**
das Auswahlelement als Teil einer Bedienoberfläche des Feldgeräts ausgebildet ist.

10. Feldgerät gemäß einem der vorhergehenden Patentansprüche,
**dadurch gekennzeichnet, dass**
das Auswahlelement einen Multiplexer ansteuert, der mit den funktionalen Einheiten zur Implementierung der IT-Sicherheitsstufe verbunden ist.

11. Nachrüstmodul für ein Feldgerät der Prozessautomatisierungtechnik mit einer Feldgeräteelektronik mit wenigstens einer Kommunikationsschnittstelle, wobei das Nachrüstmodul ein Sicherheitsmodul aufweist, wobei das Sicherheitsmodul ein Auswahlelement zur nutzerseitigen Auswahl einer IT-Sicherheitsstufe aufweist, wobei die Feldgeräteelektronik und/oder das Sicherheitsmodul eine Mehrzahl von funktionalen Einheiten zur Implementierung einer Mehrzahl vorgegebener IT-Sicherheitsstufen unterschiedlicher Höhe aufweisen, wobei die funktionalen Einheiten als in Hardware und Software implementierte Funktionsblöcke ausgestaltet sind und die funktionalen Einheiten Hardwareelemente und Softwareelemente beinhalten, das Sicherheitsmodul mit der Feldgeräteelektronik derart zusammenarbeitet, dass für die Implementierung notwendige funktionale Einheiten aktiviert und nicht notwendige funktionale Einheiten deaktiviert werden,
**dadurch gekennzeichnet, dass**
das Sicherheitsmodul derart ausgebildet ist, dass die Auswahl der IT-Sicherheitsstufe einmalig bei einer Inbetriebnahme des Feldgeräts möglich und erforderlich ist.

12. Nachrüstmodul gemäß Patentanspruch 11,
**dadurch gekennzeichnet, dass**
das Nachrüstmodul ein Kryptomodul zur Signierung und/oder Verschlüsselung von Daten aufweist.

13. Nachrüstmodul gemäß einem der Patentansprüche 11 oder 12,
**dadurch gekennzeichnet, dass**
das Nachrüstmodul ein Kommunikationsmodul zur Übermittlung von Daten des Feldgeräts an eine übergeordnete Einheit aufweist.

14. Nachrüstmodul gemäß einem der Patentansprüche 11 bis 13,
**dadurch gekennzeichnet, dass**
das Nachrüstmodul ein Authentifizierungsmodul aufweist.

15. Verfahren zur Einstellung einer IT-Sicherheitsstufe bei einem Feldgerät der Prozessautomatisierung mit einem Sicherheitsmodul mit einer Mehrzahl von funktionalen Einheiten zur Implementierung einer Mehrzahl vorgegebener IT-Sicherheitsstufen unterschiedlicher Höhe, wobei die funktionalen Einheiten als in Hardware und Software implementierte Funktionsblöcke ausgestaltet sind und die funktionalen Einheiten Hardwareelemente und Softwareelemente beinhalten, und
das Sicherheitsmodul ein Auswahlelement zur Auswahl einer IT-Sicherheitsstufe aufweist, mit den Schritten:
- Auswählen einer gewünschten IT-Sicherheitsstufe mittels des Auswahlelements,
- Auslesen des Auswahlelements,
- Aktivieren notwendiger funktionaler Einheiten und Deaktivieren nicht notwendiger funktionaler Einheiten zur Implementierung der ausgewählten IT-Sicherheitsstufe,
**dadurch gekennzeichnet, dass**
eine Einstellung einer IT-Sicherheitsstufe nur einmalig, bei einer Inbetriebnahme des Feldgerätes durchgeführt wird.

16. Verfahren gemäß Patentanspruch 15,
bei dem eine Einstellung einer IT-Sicherheitsstufe einmalig und zwangsweise bei einer Inbetriebnahme des Feldgerätes durchgeführt wird.

17. Verfahren gemäß Patentanspruch 16,
bei dem die Einstellung der IT-Sicherheitsstufe nur einmalig möglich ist, dadurch, dass das Auswahlelement mechanisch deaktiviert wird.

18. Verfahren gemäß einem der Patentansprüche 16 bis 17,
bei dem die Einstellung der IT-Sicherheitsstufe nur einmalig möglich ist, dadurch, dass das Auswahlelement elektrisch deaktiviert wird.

19. Verfahren gemäß einem der Patentansprüche 16 bis 18,
bei dem die Einstellung der IT-Sicherheitsstufe nur einmalig möglich ist, dadurch, dass das Auswahlelement softwaremäßig deaktiviert wird.

20. Verfahren gemäß einem der Patentansprüche 16 bis 19,
bei dem das Feldgerät bei einer Auslieferung die niedrigste IT-Sicherheitsstufe aufweist und diese bei der Einstellung nur erhöht werden kann.

21. Computerprogrammcode zur Einstellung einer IT-Sicherheitsstufe bei einem Feldgerät der Prozessautomatisierung mit einem Sicherheitsmodul, der wenn er in einem Prozessor ausgeführt wird, diesen dazu veranlasst, ein Verfahren gemäß einem der Patentansprüche 16 bis 21 auszuführen.

## Claims

1. A process automation technology field device having field device electronics with at least one communication interface, the field device having a security module with a plurality of functional units for implementing a plurality of predetermined IT security levels of different grades, the functional units being configured as function blocks that are implemented in hardware and software, and the functional units containing hardware elements and software elements,
the security module having a selection element for user selection of an IT security level, the functional units necessary for implementing the selected IT security level being activated and unnecessary functional units being deactivated on the basis of the selection,
**characterized in that**
the security module is designed in such a manner that the selection of the IT security level is possible and required once during commissioning of the field device.

2. The field device according to Claim 1,
**characterized in that**
the security module is configured in such a manner that the selection of the IT security level is possible during initial commissioning of the field device exclusively.

3. The field device according to one of the preceding claims,
**characterized in that**
the selection element is configured in a mechanically irreversible manner.

4. The field device according to one of the preceding claims,
**characterized in that**
the security module is configured in such a manner that the selection of the IT security level is electronically irreversible.

5. The field device according to one of the preceding claims,
**characterized in that**
the security module is configured in such a manner that the selection of the IT security level is irreversible in terms of software technology.

6. The field device according to one of the preceding claims,
**characterized in that**
the field device has the lowest IT security level upon delivery and the security module is configured in such a manner that an increase of the IT security level is possible exclusively.

7. The field device according to one of Claims 1 to 5,
**characterized in that**
the field device has the highest IT security level upon delivery and the security module is configured in such a manner that a lowering of the IT security level is possible exclusively.

8. The field device according to one of the preceding claims,
**characterized in that**
the selection element is designed as a hardware switch, preferably as a slide switch or rotary switch.

9. The field device according to one of the preceding claims,
**characterized in that**
the selection element is designed as part of a user interface of the field device.

10. The field device according to one of the preceding claims,
**characterized in that**
the selection element activates a multiplexer, which is connected to the functional units for implementing the IT security level.

11. A retrofitting module for a process automation technology field device having field device electronics with at least one communication interface, the retrofitting module having a security module, the security module having a selection element for user selection of an IT security level, the field device electronics and/or the security module having a plurality of functional units for implementing a plurality of predetermined IT security levels of different grades, the functional units being configured as function blocks that are implemented in hardware and software, and the functional units containing hardware elements and software elements, the security module cooperating with the field device electronics in such a manner that functional units necessary for the implementation are activated and unnecessary functional units are deactivated,
**characterized in that**
the security module is designed in such a manner that the selection of the IT security level is possible and required once during commissioning of the field device.

12. The retrofitting module according to Claim 11,
**characterized in that**
the retrofitting module has a cryptomodule for signing and/or encrypting data.

13. The retrofitting module according to either of Claims 11 and 12,
**characterized in that**
the retrofitting module has a communication module for transmitting data of the field device to a superordinate unit.

14. The retrofitting module device according to one of Claims 11 to 13,
**characterized in that**
the retrofitting module has an authentication module.

15. A method for setting an IT security level in a process automation field device having a security module with a plurality of functional units for implementing a plurality of predetermined IT security levels of different grades, the functional units being configured as function blocks that are implemented in hardware and software, and the functional units containing hardware elements and software elements, and
the security module having a selection element for selecting an IT security level, having the steps:
- selecting a desired IT security level by means of the selection element,
- reading the selection element,
- activating necessary functional units and deactivating unnecessary functional units for implementing the selected IT security level,
**characterized in that**
setting of an IT security level is carried out only once during commissioning of the field device.

16. The method according to Claim 15,
in which setting of an IT security level is carried out once and compulsorily during commissioning of the field device.

17. The method according to Claim 16,
in which the setting of the IT security level is only possible once, in that the selection element is mechanically deactivated.

18. The method according to either of Claims 16 and 17,
in which the setting of the IT security level is only possible once, in that the selection element is electrically deactivated.

19. The method according to one of Claims 16 to 18,
in which the setting of the IT security level is only possible once, in that the selection element is deactivated using software.

20. The method according to one of Claims 16 to 19,
in which the field device has the lowest IT security level upon delivery and this can only be increased during setting.

21. A computer program code for setting an IT security level in a process automation field device having a security module, which, when it is executed in a processor, causes the same to execute a method according to one of Claims 16 to 21.

## Revendications

1. Appareil de terrain de la technique d'automatisation des processus, comprenant une électronique d'appareil de terrain avec au moins une interface de communication, dans lequel ledit appareil de terrain comprend un module de sécurité doté d'une pluralité d'unités fonctionnelles pour la mise en œuvre d'une pluralité de niveaux de sécurité informatique prédéterminés de différents niveaux, dans lequel les unités fonctionnelles sont conçues en tant que blocs fonctionnels implémentés dans le matériel et le logiciel, et les unités fonctionnelles contiennent des éléments matériels et des éléments logiciels,
le module de sécurité comprend un élément de sélection permettant de sélectionner côté utilisateur un niveau de sécurité informatique, dans lequel, sur la base de la sélection, les unités fonctionnelles nécessaires à la mise en œuvre du niveau de sécurité informatique sélectionné sont activées et des unités fonctionnelles qui ne sont pas nécessaires sont désactivées,
**caractérisé par le fait que** le module de sécurité est conçu de telle manière que la sélection du niveau de sécurité informatique est possible et nécessaire une seule fois lors de la mise en service de l'appareil de terrain.

2. Appareil de terrain selon la revendication précédente,
**caractérisé par le fait que** le module de sécurité est conçu de telle manière que la sélection du niveau de sécurité informatique est possible uniquement lors d'une première mise en service de l'appareil de terrain.

3. Appareil de terrain selon l'une quelconque des revendications précédentes, **caractérisé par le fait que** l'élément de sélection est conçu de manière à être mécaniquement irréversible.

4. Appareil de terrain selon l'une quelconque des revendications précédentes, **caractérisé par le fait que** le module de sécurité est conçu de telle sorte que la sélection du niveau de sécurité informatique est électroniquement irréversible.

5. Appareil de terrain selon l'une quelconque des revendications précédentes, **caractérisé par le fait que** le module de sécurité est conçu de telle sorte que la sélection du niveau de sécurité informatique est irréversible sur le plan logiciel.

6. Appareil de terrain selon l'une quelconque des revendications précédentes, **caractérisé par le fait que** l'appareil de terrain présente le niveau de sécurité informatique le plus bas à la livraison et que le module de sécurité est conçu de telle manière que seule une augmentation du niveau de sécurité informatique est possible.

7. Appareil de terrain selon l'une quelconque des revendications 1 à 5, **caractérisé par le fait que** l'appareil de terrain présente le niveau de sécurité informatique le plus élevé à la livraison et que le module de sécurité est conçu de telle manière que seule une réduction du niveau de sécurité informatique est possible.

8. Appareil de terrain selon l'une quelconque des revendications précédentes, **caractérisé par le fait que** l'élément de sélection est conçu en tant que commutateur matériel, de préférence en tant qu'interrupteur à coulisse ou comme commutateur rotatif.

9. Appareil de terrain selon l'une quelconque des revendications précédentes, **caractérisé par le fait que** l'élément de sélection est conçu comme une partie d'une surface de commande de l'appareil de terrain.

10. Appareil de terrain selon l'une quelconque des revendications précédentes, **caractérisé par le fait que** l'élément de sélection commande un multi-plexeur qui est connecté aux unités fonctionnelles pour mettre en œuvre le niveau de sécurité informatique.

11. Module de rattrapage pour un appareil de terrain de la technique d'automatisation des processus comprenant une électronique d'appareil de terrain avec au moins une interface de communication, dans lequel le module de rattrapage comprend un module de sécurité, le module de sécurité comprenant un élément de sélection pour sélectionner côté utilisateur un niveau de sécurité informatique, dans lequel l'électronique d'appareil de terrain et/ou le module de sécurité comprend/comprennent une pluralité d'unités fonctionnelles pour la mise en œuvre d'une pluralité de niveaux de sécurité informatique prédéterminés de différents niveaux, dans lequel les unités fonctionnelles sont conçues en tant que blocs fonctionnels implémentés dans le matériel et le logiciel et les unités fonctionnelles contiennent des éléments matériels et des éléments logiciels, le module de sécurité agit de concert avec l'électronique d'appareil de terrain de telle manière que des unités fonctionnelles nécessaires à la mise en œuvre sont activées et des unités fonctionnelles qui ne sont pas nécessaires sont désactivées, **caractérisé par le fait que** le module de sécurité est conçu de telle manière que la sélection du niveau de sécurité informatique est possible et nécessaire une seule fois lors d'une mise en service de l'appareil de terrain.

12. Module de rattrapage selon la revendication 11,
**caractérisé par le fait que** le module de rattrapage comprend un module cryptographique pour signer et/ou crypter des données.

13. Module de rattrapage selon l'une quelconque des revendications 11 ou 12, **caractérisé par le fait que** le module de rattrapage présente un module de communication pour transmettre des données de l'appareil de terrain à une unité de niveau supérieur.

14. Module de rattrapage selon l'une quelconque des revendications 11 à 13, **caractérisé par le fait que** le module de rattrapage comprend un module d'authentification.

15. Procédé de réglage d'un niveau de sécurité informatique dans un appareil de terrain de la technique d'automatisation des processus, comprenant un module de sécurité avec une pluralité d'unités fonctionnelles pour la mise en œuvre d'une pluralité de niveaux de sécurité informatique prédéterminés de différents niveaux, dans lequel les unités fonctionnelles sont conçues en tant que blocs fonctionnels implémentés dans le matériel et le logiciel, et les unités fonctionnelles contiennent des éléments matériels et logiciels, et le module de sécurité comprend un élément de sélection pour la sélection d'un niveau de sécurité informatique, comprenant les étapes consistant à:
- sélectionner un niveau de sécurité informatique souhaité à l'aide de l'élément de sélection,
- lire l'élément de sélection,
- activer des unités fonctionnelles nécessaires et désactiver des unités fonctionnelles non nécessaires pour mettre en œuvre le niveau de sécurité informatique sélectionné,
**caractérisé par le fait qu'**un réglage d'un niveau de sécurité informatique n'est effectué qu'une seule fois, lors d'une mise en service de l'appareil de terrain.

16. Procédé selon la revendication 15,
dans lequel un réglage d'un niveau de sécurité informatique est effectué une seule fois et de manière forcée lors d'une mise en service de l'appareil de terrain.

17. Procédé selon la revendication 16,
dans lequel le réglage du niveau de sécurité informatique n'est possible qu'une seule fois par le fait que l'élément de sélection est désactivé mécaniquement.

18. Procédé selon l'une quelconque des revendications 16 à 17,
dans lequel le réglage du niveau de sécurité informatique n'est possible qu'une seule fois par le fait que l'élément de sélection est désactivé électriquement.

19. Procédé selon l'une quelconque des revendications 16 à 18,
dans lequel le réglage du niveau de sécurité informatique n'est possible qu'une seule fois par le fait que l'élément de sélection est désactivé sur le plan logiciel.

20. Procédé selon l'une quelconque des revendications 16 à 19, dans lequel l'appareil de terrain présente le niveau de sécurité informatique le plus bas à la livraison et que celui-ci peut être uniquement augmenté lors du réglage.

21. Code de programme informatique pour régler un niveau de sécurité informatique dans un appareil de terrain de la technique d'automatisation des processus comprenant un module de sécurité, qui, lorsqu'il est exécuté dans un processeur, amène celui-ci à mettre en œuvre un procédé selon l'une quelconque des revendications 16 à 21.
